# EUROPÄISCHE PATENTSCHRIFT

(11) **EP 1 277 810 B1**
(45) Veröffentlichungstag und Bekanntmachung des Hinweises auf die Patenterteilung: **23.11.2005**
(21) Anmeldenummer: 02015598.2
(22) Anmeldetag: 15.07.2002
(51) Int. Cl.: C09D 11/00

(54) **Wässrige Ink Jet-Tinte**
Aqueous ink jet ink
Encre aqueuse pour l'enregistrement par jet

(30) Priorität: 20.07.2001 DE 10135496
(43) Veröffentlichungstag der Anmeldung: 22.01.2003
(73) Patentinhaber: Pelikan Hardcopy Production AG, 8132 Egg (CH)
(72) Erfinder: Howald, Nicole, 8645 Jona (CH)
(74) Vertreter: Hagemann, Heinrich

(56) Entgegenhaltungen:
- EP-A- 0 509 668
- EP-A- 0 685 536
- EP-A- 0 867 486
- US-A- 5 302 197

## Beschreibung

Die Erfindung betrifft eine wäßrige Ink Jet-Tinte mit einem Gehalt an Pyrrolidon und/oder Pyrrolidonderivat, mindestens zwei organischen Lösungsmitteln, einem oder mehreren Pigmenten und gegebenenfalls weiteren üblichen Additiven.

Der Tintenstrahldruck oder auch Ink Jet-Druck ist ein berührungsloses, direktes Sofort-Druckverfahren ohne materielle Druckform, das auf thermischen oder elektrophysikalischen Prinzipien beruht. Die zu druckende Information wird dabei in Form einzelner Tintentropfen auf ein Druckmedium, in der Regel Papier, übertragen. Beim Continuous Jet-Verfahren erfolgt die Tropfenerzeugung aus einem kontinuierlichen Tintenstrahl, der mit statischem Überdruck aus einer Düse austritt. Angeregt, beispielsweise mittels eines Piezowandlers, zerfällt der Tintestrahl sodann in Tropfen definierter Größe, die je nach Tintenart, unter Einwirkung eines magnetischen oder elektrostatischen Feldes in der gewünschten Weise auf dem Druckmedium platziert werden; nicht benötigte Tropfen werden unter Feldeinwirkung in eine Tintenriickführeinrichtung abgelenkt. Beim Drop on Demand-Verfahren erfolgt die Tropfenerzeugung demgegenüber "auf Bedarf", d. h. durch gezielte elektrische Impulsansteuerung eines Tropfengenerators, der dadurch die Abgabe eines Tintentropfens aus einer Düse bewirkt. Als Tropfengeneratoren dienen in der Regel Piezowandler, elektromagnetische oder elektrostriktive Wandler.

Eine besondere Stellung nimmt das sogenannte Bubble Jet-Verfahren ein. Die Tropfenerzeugung erfolgt hierbei thermisch durch kurzzeitiges Überhitzen eines in der Tinte angeordneten Heizelementes. Die dabei entstehende Dampfblase verdrängt impulsartig die Tinte über dem Heizelement und führt dadurch zum Austritt eines Tropfens aus der zugeordneten Düse, der wiederum auf dem Druckmedium platziert wird.

Gegenüber den vorgenannten Verfahren entfallen beim Bubble Jet-Verfahren mechanisch bewegte Komponenten. Da Druckköpfe mit elektrothermischen Wandlern damit in der Regel kleiner und billiger hergestellt werden können als solche mit elektromechanischen Wandlerelementen, haben Bubble Jet-Drucker heute eine weite Verbreitung im Markt gefunden.

Die im Ink Jet-Druck verwendeten Farben sind regelmäßig dünnflüssige Tinten auf Wasser- und/oder Lösungsmittel-Basis mit einer Viskosität von etwa 1 bis 30 mPa.s. Sie enthalten neben der besonders beim Bubble Jet-Druck für die Dampfbildung wesentlichen Komponente Wasser regelmäßig ein Gemisch aus verschiedenen organischen Lösungsmitteln (zum Teil bis zu acht Komponenten zur Steuerung der Trocknungszeit), und zwar Ketone (vorwiegend Methylethylketon), Acetate, Glykolether, Pyrrolidone, Glykole, Glycerin und Alkohole (z.B. Ethanol). Der Lösungsmittelanteil beträgt im allgemeinen bei der Drop on Demand-Technologie etwa 15 bis 60 Gew.-%. Beim Continuous Ink Jet-Verfahren kann der Lösungsmittelanteil auch bis zu 98 Gew.-% betragen. Die Farbmittel, die regelmäßig eine Menge von etwa 2 bis 6 Gew.-% der Ink Jet-Tinte ausmachen, sind vorwiegend lösliche Farbstoffe mit hoher Lichtechtheit und Thermostabilität, zum Teil aber auch unlösliche Pigmente einer Teilchengröße unter etwa 3 µm, möglichst unter 1*µ*m.

Ist es erforderlich, eine elektrische Leitfähigkeit einzustellen, dann wird regelmäßig ein leitfähiges Salz zur Erzielung einer elektrischen Leitfähigkeit von möglichst mehr als 10⁴ Ω⁻¹cm⁻¹ herangezogen. Im Ruhezustand soll die Tinte in den Düsen auch über längere Zeit weder eintrocknen noch verkrusten. Im allgemeinen werden den Ink Jet-Tinten zur Einstellung einer ausreichenden Konservierung Biozide zugesetzt, damit sie auf keinen Fall beispielsweise von Bakterien oder Schimmel befallen werden können. Die Ink Jet-Tinten müssen mit den Materialien des Tintenbehälters, der Tintenzuleitung und des Schreibkopfes verträglich sein; sie dürfen nicht korrosiv sein und enthalten darum zum Teil auch Korrosionsinhibitoren. Weitere wichtige Parameter der Tinten für das Ink Jet-Verfahren sind die Viskosität, die Oberflächenspannung, die Leitfähigkeit und der pH-Wert. Je nach System müssen diese physikalischen Werte der Ink Jet-Tinte den Anforderungen des Einzelfalles angepaßt werden.

Die EP 0 509 668 A1 befaßt sich mit einer Ink Jet-Tinte der eingangs beschriebenen Art, die insbesondere für das Bubble Jet-Verfahren, geeignet ist. Diese Ink Jet-Tinte enthält etwa 2,5 bis 25 Gew.-% Pyrrolidon oder ein spezielles Pyrrolidonderivat, nämlich N-(2-Hydroxyethyl)-2-pyrrolidon, oder eine Mischung hiervon sowie etwa 1 bis 10 Gew.-% Farbstoffe und Rest Wasser. Der pH-Bereich soll auf etwa 4 bis 12 eingestellt sein. Ziel dieser bekannten Lehre ist es, die Schmierfestigkeit des Ink Jet-Ausdrucks auf Papier zu verbessern. Hierzu wird es bevorzugt, dass die Ink Jet-Tinte Verflüchtigungshilfsmittel ("drying time improver"), insbesondere in Form niederer Alkohole mit etwa 1 bis 4 Kohlenstoffatomen, enthält. Ein weiterer Vorteil soll dadurch erreicht werden, indem der Tinte bis zu etwa 5 Gew.-% Glykol, wie Ethylenglykol, Diethylenglykol, Triethylenglykol, Propylenglykol und dergleichen, einverleibt werden. Es wird ausdrücklich hervorgehoben, dass die Obergrenze dieses Anteils an mehrwertigem Alkohol nicht überschritten werden sollte. Größere Mengen führen zu einer verschlechterten Druckqualität. Für die Zwecke der Praxis soll sie dann nicht mehr geeignet sein. Ferner hat sich gezeigt, dass die Schmierfestigkeit von Ausdrucken mit dieser bekannten Ink Jet-Tinte, wenn sie Pigmente enthält, nicht auf allen gängigen Papieren zufriedenstellend ist.

Die Lehre nach der EP 0 685 536 A1 betrifft eine Ink Jet-Tinte mit einem Gehalt an 2-Pyrrolidon, einem Pigment und einem Dispergiermittel neben einer Harz-Emulsion, die in dem 2-Pyrrolidon löslich ist. Diese Tinten-Zusammensetzung soll ein ungünstiges Phänomen, das herkömmlichen Tinten-Zusammensetzungen innewohnt, die ein Pigment enthalten, beheben, insbesondere einen ungleichmäßigen Druck. Für die Ausbildung des wässrigen Tinten-Mediums kommen vielfältige Lösungsmittel in Frage.

Daher war es Aufgabe der vorliegenden Erfindung, die eingangs bezeichnete Ink Jet-Tinte so zu verbessern, dass auf allen gängigen Papieren ein zufriedenstellender Ausdruck, insbesondere mit dem Bubble Jet-Verfahren möglich ist, wobei insbesondere die Schmierfestigkeit des Ausdrucks bei gleichbleibend guter Randschärfe verbessert werden soll.

Erfindungsgemäß wird diese Aufgabe dadurch gelöst, dass die Ink Jet-Tinte enthält a) 8 bis 16 Gew.-% 2-Pyrrolidon und/oder Pyrrolidonderivat, b) 8 bis 25 Gew.-% eines mehrwertigen Alkohols, c) 1 bis 12 Gew.-% eines flüchtigen organischen Lösungsmittels in Form von Aceton, Pentanol oder eines niederen Alkohols mit 1 bis 4 Kohlenstoffatomen als Verflüchtigungshilfsmittel, d) 1 bis 10 Gew.-% Pigment und e) der Rest Wasser, wobei f) die Menge von b) gleich oder größer als die von a) ist.

Die vorliegende Erfindung nutzt die bekannte vorteilhafte Verwendung von Pyrrolidon und/oder Pyrrolidonderivat, vorzugsweise 2-Pyrrolidon, N-(2-Hydroxyäthyl)-2-pyrrolidon und/oder N-Methyl-2-pyrrolidon, insbesondere die Verwendung von 2-Pyrrolidon in Ink Jet-Tinten. Sie werden im allgemeinen als "Co-Lösungsmittel" bezeichnet und steigern die Druckqualität, insbesondere die Randschärfe und den Farbkontrast. Zudem vermindern sie die Gefahr des Verstopfens der Düsen. Die Erfindung unterliegt bei der Wahl der Pyrrolidonderivate keiner besonderen Beschränkung, wenngleich die vorstehend bezeichneten bevorzugt werden. Die Menge an Pyrrolidon und/oder Pyrrolidonderivate liegt in der wäßrigen Ink Jet-Tinte gemäß der Erfindung zwischen 8 und 16 Gew.-%. Wird der Wert von 16 Gew.-% überschritten, dann werden die angesprochenen Effekte nicht mehr gesteigert. Eine Menge von 8 bis 14 Gew.-% wird bevorzugt, wobei in diesem Bereich besonders gute Ergebnisse erzielt werden, sofern dabei die Forderung der Erfindung bedacht wird, daß die Menge des gleichfalls zwingend heranzuziehenden mehrwertigen Alkohols gleich oder größer als die Menge des Pyrrolidons und/oder Pyrrolidonderivats ist.

Nach Merkmal b) muß ein mehrwertiger Alkohol einbezogen werden, wobei dessen Menge unter Beachtung der angesprochenen Relation zwischen 8 und 25 Gew.-% liegt. Der Bereich von 10 bis 20 Gew.-% ist bevorzugt, ganz besonders der von 11 bis 16 Gew.-%. In der Wahl des mehrwertigen Alkohols unterliegt die Erfindung keiner wesentlichen Einschränkung. Sehr vorteilhaft ist der Einsatz von Ethylenglykol und/oder Glycerin aufgrund ihrer preiswerten Verfügbarkeit. Einsetzbar sind auch, wie beispielsweise nach der EP 0 509 668 A1 vorgeschlagen, Ethylenglykol, Diethylenglykol, Triethylenglykol, Propylenglykol, aber auch höherwertige Alkohole, beispielsweise vierwertige Alkohol, wie Pentaerythrit, fünfwertige Alkohole (Pentite), wie insbesondere Arabit, Adonit und Xylit, sowie auch sechswertige Alkohole (Hexite), wie Sorbit, Mannit und Dulcit. Bei den letzteren handelt es sich um feste Verbindungen. Gegen die richtungsweisenden Angaben der EP 0 503 668 A1, wonach der mehrwertige Alkohol in der Ink Jet-Tinte nur in einer Menge bis zu maximal 5 Gew.-% enthalten sein darf, verlangt die Erfindung als Mindestwert etwa 6 Gew.-%. Dieses Merkmal löst im funktionellen Zusammenwirken mit den weiteren Merkmalen der erfindungsgemäßen Lehre die gestellte Aufgabe, wie die nachfolgenden Versuche zeigen, in dem wünschenswerten Ausmaß.

Wichtig ist es für den angestrebten Erfolg, daß die wäßrige Ink Jet-Tinte ein Verflüchtigungshilfsmittel enthält. Dieses ist eine leicht verdampfbare Flüssigkeit, die vorzugsweise mit Wasser mischbar ist. Es handelt sich dabei um Aceton, um niedere Alkohole mit 1 bis 4 Kohlenstoffatomen sowie um Pentanol und dessen Isomeren. Bevorzugt sind Methanol, Ethanol, Propanol, Isopropanol und Butanol und deren Isomeren. Besonders bevorzugt ist Isopropanol. Die hiermit verbundenen Eigenschaften zeigen sich insbesondere darin, daß die Tinte auf dem Papier schneller trocknet und die Schmierfestigkeit verbessert wird.

Das Verflüchtigungshilfsmittel liegt in der erfindungsgemäßen Ink Jet-Tinte in einer Menge von 1 bis 12 Gew.-%, insbesondere 1 bis 7 Gew.-%, vor. Besonders bevorzugt wird der Bereich von 2,5 bis 4,5 Gew.-%. Wird der Wert von 1 Gew.-% unterschritten, dann setzt der gewünschte Verflüchtigungseffekt nicht hinlänglich ein. Ein Überschreiten der Obergrenze von 12 Gew.-% kann beim Ausstoß der Tinte aus den Düsen zur Bildung von unerwünschten Satellitentropfen führen und damit zu einer Verminderung der Druckqualität, insbesondere der Randschärfe und des Druckkontrastes.

Die erfindungsgemäße Tinte enthält als Farbmittel ein Pigment in einer Menge von 1 bis 10 Gew.-%, vorzugsweise von 1,5 bis 6 Gew.-%. Es ist nicht ausgeschlossen, daß zusätzlich beispielsweise wasserlösliche Farbstoffe einbezogen werden. Allerdings tritt bei wasserlöslichen Farbstoffen die angesprochene Problematik der Schmierfestigkeit nicht so stark in Erscheinung. Es sind alle gängigen organischen und anorganischen Pigmente geeignet, die im vorliegenden technologischen Bereich bereits genutzt werden. Bei den Farben werden zumeist organische Pigmente, wie Azo- (Pigment Yellow 74), Quinacridone- ( Pigment Red 122), Kupferphthalocyan-Pigmente (Pigment Blue 15:3) verwendet. Für Schwarz wird zumeist Russ, ein anorganisches Pigment (Pigment Black 7), verwendet. Die Pigmentteilchengröße wird vorzugsweise auf unter etwa 0,3 µm eingestellt, insbesondere unter etwa 0,5 *µ*m.

Es kann in Einzelfällen von Vorteil sein, wenn C.I. Direct Black 168 nicht eingesetzt wird. Auch kann es insbesondere vorteilhaft sein, wenn 0,01 bis 5 Gew.-% eines Alkylenoxid-Addukts von Acetylenglykol der Formel 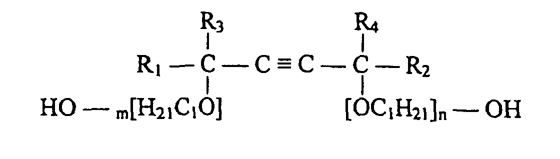 worin R₁ bis R₄ jeweils eine Niederalkylgruppe darstellen, ℓ eine ganze Zahl 2 oder 3 sowie m und n jeweils eine ganze Zahl von 1 oder mehr darstellen, ausgenommen sind.

Da es sich bei dem Gegenstand der Erfindung um eine wäßrige Ink Jet-Tinte handelt, macht der Rest zu der Summe der vorstehenden quantitativen Angaben bis auf 100% Wasser aus.

Die erfindungsgemäße Ink Jet-Tinte hat, wenn der pH-Wert eine Rolle spielt, vorzugsweise einen pH-Wert von 5 bis 12, insbesondere von 6 bis 9. Ganz besonders wird in diesen Fällen ein Wert von 7 bis 8 eingestellt, um möglichst keine Korrosion im Drucksystem zu verursachen. Zur Einstellung des pH-Wertes können beispielsweise herangezogen werden Triethanolamin, Natronlauge, beliebige Säuren, Puffer, wie Ammoniumacetat und dergleichen.

Die erfindungsgemäße Ink Jet-Tinte kann auch Biozide zum hinlänglichen Konservieren enthalten. Als besonders vorteilhafte Biozide können angegeben werden: Acticid LA® der Thor Chemie GmbH, DE, welches eine 3:1-Mischung von 5-Chlor-2-methyl-2H-isodiazol-3-on und 2-Methyl-2H-isothiazol-3-on sowie 2-Brom-2-nitropropan-1,3-diol enthält, sowie Preventol® VP OC 3058 TM von Bayer AG, DE, welches 2-Octyl-2H-isothiazol-3-on und Benzylhemiformal/Benzylalkoholmono(poly)hemiformal enthält.

Um die Oberflächenspannung geeignet einzustellen, lassen sich grenzflächenaktive Mittel bzw. Tenside heranziehen. Tenside/Netzmittel wirken nach dem "Kopf/ Schwanz"-Prinzip. Hierbei lagert sich der Kopf an die jeweilige Oberfläche an. Der Schwanz zeigt in das Lösungsmittel. Besonders vorteilhaft sind dabei das im Handel erhältliche Surfynol 440 (polyethoxyliertes 2,4,7,9-Tetra-methyl-5-decyne-4,7-diol), Surfynol 104 (2,4,7,9-Tetramethyl-5-decyne-4,7-diol), beide von der Firma Air Products, Surfadone LP 100 (N-Octylpyrrolidon) sowie Surfadone LP 300 (N-Dodecylpyrrolidon), erhältlich von der Firma ISP.

Wenn eine höhere Leitfähigkeit erforderlich ist, können zu deren Einstellung geeignete Additive herangezogen werden, insbesondere bei Tinten für den Continuous Jet-Druck. Dies sind insbesondere nicht-korrosive, niedrig-toxische, wasserlösliche Salze, insbesondere in einer Menge von etwa 0,01 bis etwa 0,1 Gew.-%. Typische Beispiele hierfür sind niedrige Alkylammoniumchloride.

Die Erfindung soll nachfolgend anhand von drei erfindungsgemäßen Rezepturen sowie zwei Vergleichsrezepturen noch näher erläutert werden.

### Beispiel

Die nachfolgenden Vergleichsbeispiele bzw. die darin angegebenen Rezepturen wurden zur Demonstration der vorteilhaften Effekte, die mit der Erfindung verbunden sind, gewählt. Gedruckt wurde auf handelsübliche Kopierpapiere mit einem Hewlett Packard 850-Drucker.

**Tabelle 1:**

| | Beispiel 1 | Beispiel 2 | Beispiel 3 | Vergleichsbeispiel 1 | Vergleichsbeispiel 2 |
|---|---|---|---|---|---|
| Dest. Wasser | 49,9 | 45,90 | 48,90 | 47,6 | 44,76 |
| Biozid | 0,1 | 0,10 | 0,10 | 0,1 | 0,1 |
| Glycerin | 12,0 | 13,00 | 13,00 | 13 | 14 |
| 2-Pyrrolidon | 10,0 | 13,00 | 10,00 | 14 | 16 |
| Isopropanol | 3,0 | 3,00 | 3,00 | | |
| Surfynol 440 | | | | | 0,1 |
| Surfynol 104 PA | | | | 0,1 | 0,04 |
| pH-Stellmittel | | | | 0,2 | |
| 15%ige wäßrige | 25,0 | 25,00 | 25,00 | 25 | 25 |
| Ruß-Präparation | | | | | |
| | 100,0 | 100,00 | 100,00 | 100 | 100 |
| Oberflächenspannung | 50,6 | 50,4 | 51,1 | 46,1 | 42 |
| Schmierfestigkeit | sehr gut | gut | sehr gut | schlecht | gut |
| Randschärfe | sehr gut | sehr gut | sehr gut | gut | schlecht |

Es zeigt sich, daß mit den erfindungsgemäßen Rezepturen ohne Zusatz eines Netzmittels vorzüglich Ergebnisse erzielt werden, insbesondere stets eine gute bzw. sehr gute Schmierfestigkeit auf dem bedruckten Papier erzielt wird, wobei die Randschärfen stets immer als sehr gut zu bewerten sind. Bei den Vergleichsrezepturen ist die Schmierfestigkeit entweder schlecht oder nur gut. In dem Falle, bei dem die Schmierfestigkeit gut ist, ist die Randschärfe schlecht.

Die Tabellenwerte zur Oberflächenspannung und Schmierfestigkeit sowie der Randschärfe wurden wie folgt bestimmt:
1. Die Oberflächenspannung wurde nach der Ringmethode nach du Noüy bestimmt. Die Einheit ist mN/m. Hierbei wird ein Digital-Tensiometer K10T der Firma Krüss, DE, herangezogen.
2. Die Schmierfestigkeit wird dadurch bestimmt, indem man einen ausgedruckten Text mit einem Tuch und einem Textmarker verschmiert und das Ergebnis mit anderen Tinten direkt vergleicht.
3. Eine Ink Jet-Tinte wird mit "Randschärfe sehr gut" bezeichnet, wenn die Buchstabenränder klar erkennbar sind und kein Feathering auftritt, d.h., die Ink Jet-Tinte nicht an den Papierfasern entlangläuft und damit die Buchstabenränder verzerrt. Die Beurteilung ist visuell. Der Grad des Featherings wird wieder durch Vergleich festgelegt.

## Patentansprüche

1. Wässrige Ink Jet-Tinte mit einem Gehalt an Pyrrolidon und/oder Pyrrolidonderivat, mindestens zwei organischen Lösungsmitteln, einem oder mehreren Pigmenten und gegebenenfalls weiteren üblichen Additiven, **dadurch gekennzeichnet, dass** die Ink Jet-Tinte enthält
a) 8 bis 16 Gew.-% 2-Pyrrolidon und/oder Pyrrolidonderivat,
b) 8 bis 25 Gew.-% eines mehrwertigen Alkohols,
c) 1 bis 12 Gew.-% eines flüchtigen organischen Lösungsmittels in Form von Aceton, Pentanol oder eines niederen Alkohols mit 1 bis 4 Kohlenstoffatomen als Verflüchtigungshilfsmittel,
d) 1 bis 10 Gew.-% Pigment und
e) der Rest Wasser, wobei
f) die Menge von b) gleich oder größer als die von a) ist.

2. Wässrige Ink Jet-Tinte nach Anspruch 1, **dadurch gekennzeichnet, dass** sie 8 bis 14 Gew.-% Pyrrolidon und/oder Pyrrolidonderivat enthält.

3. Wässrige Ink Jet-Tinte nach Anspruch 1 oder 2, **dadurch gekennzeichnet, dass** sie 2-Pyrrolidon, N-(2-Hydroxyethyl)-2-pyrrolidon, N-Ethyl-2-pyrrolidon und/oder N-Methyl-2-pyrrolidon enthält.

4. Wässrige Ink Jet-Tinte nach einem der Ansprüche 1 bis 3, **dadurch gekennzeichnet, dass** sie 10 bis 20 Gew.-% mehrwertigen Alkohol enthält.

5. Wässrige Ink Jet-Tinte nach Anspruch 4, **dadurch gekennzeichnet, dass** sie 11 bis 16 Gew.-% mehrwertigen Alkohol enthält.

6. Wässrige Ink Jet-Tinte nach mindestens einem der vorhergehenden Ansprüche, **dadurch gekennzeichnet, dass** sie 1 bis 7 Gew.-% einwertigen Alkohol als Verflüchtigungshilfsmittel enthält.

7. Wässrige Ink Jet-Tinte nach Anspruch 6, **dadurch gekennzeichnet, dass** sie 2,5 bis 4,5 Gew.-% einwertigen Alkohol als Verflüchtigungsmittel enthält.

8. Wässrige Ink Jet-Tinte nach mindestens einem der vorhergehenden Ansprüche, **dadurch gekennzeichnet, dass** sie 1,5 bis 6 Gew.-% Pigment enthält.

9. Wässrige Ink Jet-Tinte nach mindestens einem der vorhergehenden Ansprüche, **dadurch gekennzeichnet, dass** sie als niederen Alkohol Isopropanol enthält.

10. Wässrige Ink Jet-Tinte nach mindestens einem der vorhergehenden Ansprüche, **dadurch gekennzeichnet, dass** sie als mehrwertigen Alkohol Ethylenglykol und/oder Glycerin enthält.

11. Wässrige Ink Jet-Tinte nach mindestens einem der vorhergehenden Ansprüche, **dadurch gekennzeichnet, dass** sie als Pigment organische oder anorganische Pigmente enthält.

12. Ink Jet-Tinte nach mindestens einem der vorhergehenden Ansprüche, **dadurch gekennzeichnet, dass** sie ein Netzmittel, einen pH-Puffer, einen Farbstoff und/oder ein Biozid enthält.

## Claims

1. An aqueous ink-jet ink comprising pyrrolidone and/or pyrrolidone derivative, at least two organic solvents, one or more pigments and, if desired, further customary additives, **characterized in that** the ink-jet ink contains
a) from 8% to 16% by weight of 2-pyrrolidone and/or pyrrolidone derivative,
b) from 8% to 25% by weight of a polyhydric alcohol,
c) from 1% to 12% by weight of a volatile organic solvent in the form of acetone, pentanol or a lower alcohol having from 1 to 4 carbon atoms as volatilization assistant,
d) from 1% to 10% by weight of pigment and
e) water as the remainder,
f) the amount of b) being greater than or equal to that of a).

2. An aqueous ink-jet ink according to claim 1, **characterized in that** it contains from 8% to 14% by weight of pyrrolidone and/or pyrrolidone derivative.

3. An aqueous ink-jet ink according to claim 1 or 2, **characterized in that** it contains 2-pyrrolidone, N-(2-hydroxyethyl)-2-pyrrolidone, N-ethyl-2-pyrrolidone and/or N-methyl-2-pyrrolidone.

4. An aqueous ink-jet ink according to any one of claims 1 to 3, **characterized in that** it contains from 10% to 20% by weight of polyhydric alcohol.

5. An aqueous ink-jet ink according to claim 4, **characterized in that** it contains from 11% to 16% by weight of polyhydric alcohol.

6. An aqueous ink-jet ink according to at least one of the preceding claims, **characterized in that** it contains from 1% to 7% by weight of monohydric alcohol as volatilization assistant.

7. An aqueous ink-jet ink according to claim 6, **characterized in that** it contains from 2.5% to 4.5% by weight of monohydric alcohol as volatilization agent.

8. An aqueous ink-jet ink according to at least one of the preceding claims, **characterized in that** it contains from 1.5% to 6% by weight of pigment.

9. An aqueous ink-jet ink according to at least one of the preceding claims, **characterized in that** it contains isopropanol as lower alcohol.

10. An aqueous ink-jet ink according to at least one of the preceding claims, **characterized in that** it contains ethylene glycol and/or glycerol as polyhydric alcohol.

11. An aqueous ink-jet ink according to at least one of the preceding claims, **characterized in that** it contains organic or inorganic pigments as pigment.

12. An ink-jet ink according to at least one of the preceding claims, **characterized in that** it contains a wetting agent, a pH buffer, a dye and/or a biocide.

## Revendications

1. Encre aqueuse pour impression par jet d'encre, contenant de la pyrrolidone et/ou un dérivé de pyrrolidone, au moins deux solvants organiques, un ou plusieurs pigments et éventuellement d'autres additifs usuels, **caractérisée en ce que** ladite encre pour impression par jet d'encre contient
a) 8 à 16 % en poids de 2-pyrrolidone et/ou d'un dérivé de pyrrolidone,
b) 8 à 25 % en poids d'un polyol,
c) 1 à 12 % en poids d'un solvant organique volatil sous forme d'acétone, de pentanol ou d'un alcool inférieur ayant de 1 à 4 atomes de carbone en tant qu'auxiliaire de volatilisation,
d) 1 à 10 % en poids d'un pigment et
e) le reste étant de l'eau,
f) la quantité de b) étant égale ou supérieure à la quantité de a)

2. Encre aqueuse pour impression par jet d'encre selon la revendication 1, **caractérisée en ce qu'**elle contient de 8 à 14 % en poids de pyrrolidone et/ou d'un dérivé de pyrrolidone.

3. Encre aqueuse pour impression par jet d'encre selon la revendication 1 ou 2, **caractérisée en ce qu'**elle contient de la 2-pyrrolidone de la N-(2-hydroxyéthyl)-2-pyrrolidone, de la N-éthyl-2-pyrrolidone et/ou de la N-méthyl-2-pyrrolidone.

4. Encre aqueuse pour impression par jet d'encre selon l'une des revendications 1 à 3, **caractérisée en ce qu'**elle contient de 10 à 20 % en poids d'un polyol.

5. Encre aqueuse pour impression par jet d'encre selon la revendication 4, **caractérisée en ce qu'**elle contient de 11 à 16 % en poids d'un polyol.

6. Encre aqueuse pour impression par jet d'encre selon au moins l'une des revendications précédentes, **caractérisée en ce qu'**elle contient de 1 à 7 % en poids d'un monoalcool en tant qu'auxiliaire de volatilisation.

7. Encre aqueuse pour impression par jet d'encre selon la revendication 6, **caractérisée en ce qu'**elle contient de 2,5 à 4,5 % en poids d'un monoalcool en tant qu'auxiliaire de volatilisation.

8. Encre aqueuse pour impression par jet d'encre selon au moins l'une des revendications précédentes, **caractérisée en ce qu'**elle contient de 1,5 à 6 % en poids d'un pigment.

9. Encre aqueuse pour impression par jet d'encre selon au moins l'une des revendications précédentes, **caractérisée en ce qu'**elle contient de l'isopropanol en tant qu'alcool inférieur.

10. Encre aqueuse pour impression par jet d'encre selon au moins l'une des revendications précédentes, **caractérisée en ce qu'**elle contient de l'éthylèneglycol et/ou du glycérol en tant que polyol.

11. Encre aqueuse pour impression par jet d'encre selon au moins l'une des revendications précédentes, **caractérisée en ce qu'**elle contient des pigments organiques ou inorganiques en tant que pigment.

12. Encre pour impression par jet d'encre selon au moins l'une des revendications précédentes, **caractérisée en ce qu'**elle contient un agent mouillant, un agent de tamponnage de pH, un colorant et/ou un biocide.
